# EUROPÄISCHE PATENTSCHRIFT

(11) **EP 2 346 907 B1**
(45) Veröffentlichungstag und Bekanntmachung des Hinweises auf die Patenterteilung: **07.09.2016**
(21) Anmeldenummer: 09744405.3
(22) Anmeldetag: 02.11.2009
(51) Int. Cl.: C08F 8/12

(54) **VERFAHREN ZUR HYDROLYSE VON VINYLCARBONSÄUREAMIDEINHEITEN ENTHALTENDEN POLYMEREN**
PROCESS FOR HYDROLYZING POLYMERS CONTAINING VINYLCARBOXAMIDE UNITS
PROCÉDÉ D'HYDROLYSE DE POLYMÈRES CONTENANT DES UNITÉS AMIDE D'ACIDE CARBOXYLIQUE VINYLIQUE

(30) Priorität: 05.11.2008 EP 08168363
(43) Veröffentlichungstag der Anmeldung: 27.07.2011
(73) Patentinhaber: BASF SE, 67056 Ludwigshafen am Rhein (DE)
(72) Erfinder: WINTER, Manfred, 67596 Dittelsheim-Heßloch (DE); WEIGL, Hagen, 68526 Ladenburg (DE); HÄHNLE, Hans-Joachim, 67435 Neustadt (DE); KRAMER, Andreas, 67159 Friedelsheim (DE)
(74) Vertreter: Peatfield, Jeremy William
(86) Internationale Anmeldenummer: PCT/EP2009/064424
(87) Internationale Veröffentlichungsnummer: WO 2010/052179

(56) Entgegenhaltungen:
- US-A- 4 255 548
- US-A- 4 393 174
- DATABASE WPI Week 200123 Thomson Scientific, London, GB; AN 2001-226384 XP002557305 & WO 01/05847 A1 (DAINIPPON INK & CHEM INC) 25. Januar 2001 (2001-01-25)
- CHURCH J.A.; WOOLDRIDGE D.: "Continuous High-Solids Acid Hydrolysis of Biomass in a 1 1/2-in. Plug Flow Reactor" INDUSTRIAL & ENGINEERING CHEMISTRY PRODUCT RESEARCH AND DEVELOPMENT, Bd. 20, Nr. 2, Juni 1981 (1981-06), Seiten 371-378638, XP002557306

## Beschreibung

Die Erfindung betrifft ein Verfahren zur Hydrolyse von Vinylcarbonsäureamideinheiten enthaltenden Polymerisaten durch Erhitzen von Vinylcarbonsäureamideinheiten enthaltenden Polymerisaten in wässrigem Medium in Gegenwart von Säuren oder Basen.

Aus der US-A-4,393,174 ist ein Verfahren zur Hydrolyse von Polymerisaten bekannt, die Amidseitengruppen enthalten, beispielsweise Polymere von N-Vinylformamid und N-Vinylacetamid. Die Hydrolyse erfolgt in Gegenwart von 1 bis 2, vorzugsweise 1,1 bis 1,5 Äquivalenten einer Base wie Natronlauge oder Kalilauge, bezogen auf 1 Äquivalent des zu hydrolysierenden Polymerisates bei einer Temperatur in dem Bereich von 110 bis 170 °C. Die Reaktionsdauer beträgt 1 Stunde bis 48 Stunden.

Aus der EP-A-0 071 050 sind hydrolysierte Polyvinylformamide bekannt, deren Formylgruppen entweder vollständig oder zu 20 bis 90 % unter Bildung von Aminogruppen hydrolysiert sind. Die Hydrolyse kann bei Temperaturen von 40 bis 180 °C in Gegenwart von 0,05 bis 1,5 Äquivalenten einer Mineralsäure oder Base vorgenommen werden. Sie erfolgt vorzugsweise in dem Temperaturbereich von 70 bis 90 °C in wässriger Lösung mit Salzsäure oder Natronlauge.

Aus der US-A-4,623,699 ist ein Verfahren zur Herstellung von pulverförmigen, Vinylamineinheiten enthaltenden Polymerisaten durch Abspaltung von Formylgruppen aus Vinylformamideinheiten enthaltenden Polymerisaten bekannt, wobei man pulverförmige Polymerisate des N-Vinylformamids in Gegenwart von höchstens 5 Gew.-% Wasser bei Temperaturen bis zu 200 °C mit einer gasförmigen Halogenwasserstoffsäure zur Reaktion bringt.

Nach dem aus der EP-A-0 339 371 bekannten Verfahren hydrolysiert man in Methanol suspendierte Teilchen von Copolymerisaten, die Vinylalkoholeinheiten und Vinylformamideinheiten enthalten, in Gegenwart von 0,7 bis 3, vorzugsweise 1 bis 1,5 Äquivalenten einer Base oder Säure bei Temperaturen von 50 bis 80 °C. Die Hydrolyse kann auch kontinuierlich durchgeführt werden.

Aus der US-A-4,943,676 ist ein Verfahren zur Herstellung von Polyvinylaminen bekannt, wobei man Polyvinylformamid oder Copolymerisate des N-Vinylformamids bei einer Temperatur von 200 bis 320 °C unter einem Druck von 15 bis 90 bar thermisch decarbonyliert.

Aus der US-A-5,401,808 und der US-A-5,324,792 ist ein Terpolymer bzw. ein Verfahren zur Herstellung eines Terpolymeren bekannt, das Vinylamin-, Vinylformamid und Amidineinheiten enthält, wobei man Polyvinylformamid bei Temperaturen oberhalb von 90 °C bis unterhalb von 175 °C in wäßrigem Medium, das weniger als 50 Gew.-% Ammoniak oder ein Alkylamin enthält, hydrolysiert. Der Druck wird so eingestellt, dass die Reaktionsteilnehmer unter den Reaktionsbedingungen immer in flüssiger Phase vorliegen. Nach der Hydrolyse entfernt man Ammoniak bzw. das Amin aus der wässrigen Lösung und erhält salzfreie Polymere.

Aus der US-A-5,491,199 sind salzfreie, Vinylamineinheiten enthaltenden Polymerisate bekannt. Sie werden durch Erhitzen von Vinylformamideinheiten enthaltenden Polymeren auf eine Temperatur von 50 bis 225 °C in wässrigem Medium in Gegenwart eines Katalysators aus der Gruppe der Übergangsmetalle der VIII. Gruppe des Periodischen Systems, Vanadium, Chrom, Mangan, Kupfer und Zink erhalten.

Nach dem aus der DE-A-197 10 212 bekannten kontinuierlichen Verfahren hydrolysiert man wasserhaltige Pulver von N-Vinylformamidpolymerisaten in Gegenwart von 0,5 bis 1,5 Äquivalenten einer Base oder Säure in dem Temperaturbereich von 20 bis 100 °C in einem Reaktionskessel, der mit mindestens zwei parallelen, rotierenden Rührerwellen mit Rührorganen ausgerüstet ist.

Der Erfindung liegt die Aufgabe zugrunde, ein weiteres Verfahren zur Herstellung von Vinylamineinheiten enthaltenden Verbindungen zur Verfügung zustellen. Bei einer partiellen Hydrolyse soll der Hydrolysegrad der Polymeren reproduzierbar auf einen definierten Wert eingestellt werden und nur innerhalb sehr enger Grenzen schwanken.

Die Aufgabe wird erfindungsgemäß gelöst mit einem Verfahren zur Hydrolyse von Vinylcarbonsäureamid-Einheiten enthaltenden Polymerisaten durch Erhitzen von Vinylcarbonsäureamid-Einheiten enthaltenden Polymerisaten in wässrigem Medium in Gegenwart von Säuren oder Basen, wenn man einem Rohrreaktor unter erhöhtem Druck kontinuierlich eine wässrige Lösung oder Dispersion eines VinylcarbonsäureamidEinheiten enthaltenden Polymerisates und einer wässrigen Lösung einer Base oder Säure zuführt, wobei man pro Vinylcarbonsäureamid-Äquivalent 0,1 bis weniger als ein Äquivalent einer Base oder Säure einsetzt, die Mischung bei einer Temperatur von >100 °C bis zu 250 °C durch den Rohrreaktor leitet, entspannt und abkühlt.

Vinylcarbonsäureamid-Einheiten enthaltende Polymerisate sind z.B. aus den zum Stand der Technik genannten Literaturstellen bekannt. Man erhält sie, indem man
(i) mindestens ein Monomer der Formel 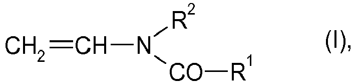 in der R¹, R² = H oder C₁- bis C₆-Alkyl bedeuten,
und gegebenenfalls
(ii) mindestens ein anderes monoethylenisch ungesättigtes Monomer und gegebenenfalls
(iii) mindestens ein vernetzend wirkendes Monomer mit mindestens zwei Doppelbindungen im Molekül
polymerisiert.

Beispiele für Monomere der Formel I sind N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid. Die Monomeren der Gruppe (i) werden vorzugsweise allein zu Homopolymerisaten polymerisiert. Bevorzugt eingesetztes Monomer dieser Gruppe ist N-Vinylformamid (in Formel I sind dann R¹ und R² = H).

Von technischer Bedeutung sind außerdem Copolymerisate von Monomeren der Formel I mit anderen ethylenisch ungesättigten Monomeren. Sie sind erhältlich durch Copoylmerisieren von
(i) mindestens eines N-Vinylcarbonsäureamids zusammen mit
(ii) mindestens einem anderen monoethylenisch ungesättigten Monomeren.

Beispiele für Monomere der Gruppe (ii) sind Ester von α,β-ethylenisch ungesättigten Mono- und Dicarbonsäuren mit C₁-C₃₀-Alkanolen, C₂-C₃₀-Alkandiolen und C₂-C₃₀-Aminoalkoholen, Amide von α,β-ethylenisch ungesättigten Monocarbonsäuren und deren N-Alkyl- und N,N-Dialkylderivate, Nitrile von α,β-ethylenisch ungesättigten Mono-und Dicarbonsäuren, Ester von Vinylalkohol und Allylalkohol mit C₁-C₃₀-Monocarbonsäuren, N-Vinyllactame, Dialkyldiallylammoniumhalogenide, stickstoffhaltige Heterocyclen mit α,β-ethylenisch ungesättigten Doppelbindungen, Vinylaromaten, Vinylhalogenide, Vinylidenhalogenide, C₂-C₈-Monoolefine und Mischungen davon.

Geeignete Vertreter sind z.B. Methyl(meth)acrylat (diese Schreibweise symbolisiert hier wie auch im folgenden Text sowohl "Acrylate" als auch "Methacrylate"), Methylethacrylat, Ethyl(meth)acrylat, Ethylethacrylat, n-Butyl(meth)acrylat, Isobutyl(meth)acrylat, tert.-Butyl(meth)acrylat, tert.-Butylethacrylat, n-Ocytl(meth)acrylat, 1,1,3,3-Tetramethylbutyl(meth)acrylat, Ethylhexyl(meth)acrylat und Mischungen davon.

Geeignete zusätzliche Monomere der Guppe (ii) sind weiterhin die Ester von α,β-ethylenisch ungesättigten Mono- und Dicarbonsäuren mit Aminoalkoholen, vorzugsweise C₂-C₁₂-Aminoalkoholen. Diese können am Aminstickstoff C₁-C₈-monoalkyliert oder -dialkyliert sein. Als Säurekomponente dieser Ester eignen sich z.B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden Acrylsäure, Methacrylsäure und deren Gemische eingesetzt. Dazu zählen beispielsweise N-Methylaminomethyl(meth)acrylat, N-Methylaminoethyl(meth)acrylat, N,N-Dimethylaminomethyl(meth)acrylat, N,N-Dimethylaminoethyl(meth)acrylat, N,N-Diethylaminoethyl(meth)acrylat, N,N-Dimethylaminopropyl(meth)acrylat, N,N-Diethylaminopropyl(meth)acrylat und N,N-Dimethylaminocyclohexyl(meth)acrylat.

Ebenfalls geeignet sind als Monomere der Gruppe (ii) die Quarternierungsprodukte der vorstehenden basischen Verbindungen mit beispielsweise einem C₁-C₈ Alkylchlorid, C₁-C₈-Dialkylsulfat, C₁-C₁₆-Epoxiden oder Benzylchlorid.

Weiterhin sind als Monomere der Gruppe (ii) geeignet 2-Hydroxyethyl(meth)acrylat, 2-Hydroxyethylethacrylat, 2-Hydroxypropyl(meth)acrylat, 3-Hydroxypropyl(meth)acrylat, 3-Hydroxybutyl(meth)acrylat, 4-Hydroxybutyl(meth)acrylat, 6-Hydroxyhexyl(meth)acrylat und Mischungen davon.

Geeignete zusätzliche Monomere der Gruppe (ii) sind weiterhin Acrylsäureamid, Methacrylsäureamid, N-Methyl(meth)acrylamid, N-Ethyl(meth)acrylamid, n-Propyl(meth)acrylamid, N-(n-Butyl)(meth)acrylamid, tert.-Butyl(meth)acrylamid, n-Octyl(meth)acrylamid, 1,1,3,3-Tetramethylbutyl(meth)acrylamid, Ethylhexyl(meth)acrylamid und Mischungen davon.

Darüber hinaus sind als weitere Monomere der Gruppe (ii) N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)butyl]methacrylamid, N-[2-(Diethylamino)ethyl]acrylamid, N-[2-(Diethylamino)ethyl]methacrylamid und Mischungen davon geeignet. Außerdem kommen die Quarternierungsprodukte der vorstehenden Verbindungen mit beispielsweise einem C₁-C₈ Alkylchlorid, C₁-C₈-Dialkylsulfat, C₁-C₁₆-Epoxiden oder Benzylchlorid, sowie Dimethyldiallylammoniumchlorid und Diethyl-diallylammoniumchlorid als Monomere der Gruppe (ii) in Betracht.

Weitere Beispiele für Monomere der Gruppe (ii) sind Nitrile von α,β-ethylenisch ungesättigten Mono- und Dicarbonsäuren wie beispielsweise Acrylnitril und Methacrylnitril. Geeignete Monomere der Gruppe (ii) sind weiterhin N-Vinyllactame und deren Derivate, die z.B. einen oder mehrere C₁-C₆-Alkylsubstituenten (wie oben definiert) aufweisen können. Dazu zählen N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam und deren Mischungen.

Weiterhin sind als Monomere der Gruppe (ii) N-Vinylimidazole und Alkylvinylimidazole geeignet, insbesondere Methylvinylimidazole wie beispielsweise 1-Vinyl-2-methylimidazol, 3-Vinylimidazol-N-oxid, 2- und 4-Vinylpyridin-N-oxide sowie betainische Derivate und Quaternisierungsprodukte dieser Monomere sowie Ethylen, Propylen, Isobutylen, Butadien, Styrol, α-Methylstyrol, Vinylacetat, Vinylpropionat, Vinylchlorid, Vinylidenchlorid, Vinylfluorid, Vinylidenfluorid und Mischungen davon.

Als andere monoethylenisch ungesättigte Monomere der Gruppe (ii) kommen auch anionische Monomere in Betracht. Sie können gegebenenfalls mit den oben beschriebenen neutralen und/oder kationischen Monomeren copolymerisiert werden.

Beispiele für anionische Monomere der Gruppe sind ethylenisch ungesättigte C₃- bis C₈-Carbonsäuren wie beispielsweise Acrylsäure, Methacrylsäure, Dimethacrylsäure, Ethacrylsäure, Maleinsäure, Fumarsäure, Itaconsäure, Mesaconsäure, Citraconsäure, Methylenmalonsäure, Allylessigsäure, Vinylessigsäure und Crotonsäure. Als Monomere dieser Gruppe eignen sich außerdem Sulfogruppen enthaltende Monomere wie Vinylsulfonsäure, Acrylamido-2-methyl-propansulfonsäure, Methallylsulfonsäure, Styrolsulfonsäure und deren Alkylsubstituierte Derviate sowie Phosphongruppen enthaltende Monomere wie Vinylphosphonsäure. Die Monomeren dieser Gruppe können allein oder in Mischung miteinander, in teilweise oder in vollständig neutralisierter Form bei der Copolymerisation mit den Monomeren der Gruppe (i) eingesetzt werden. Zur Neutralisation verwendet man beispielsweise Alkalimetall- oder Erdalkalimetallbasen, Ammoniak, Amine und/oder Alkanolamine. Beispiele hierfür sind Natronlauge, Kalilauge, Soda, Pottasche, Natriumhydrogencarbonat, Magnesiumoxid, Calciumhydroxid, Calcium-oxid, Triethanolamin, Ethanolamin, Morpholin, Diethylentriamin oder Tetraethylenpentamin.

Die zuvor genannten Monomeren der Gruppe (ii) können einzeln oder in Form von beliebigen Mischungen bei der Copolymerisation mit einem Vinylcarbonsäureamid eingesetzt werden. Typischerweise werden sie in Mengen von 1 bis 90 Mol%, bevorzugt 10 bis 80 Mol% und besonders bevorzugt 10 bis 60 Mol% eingesetzt. Besonders bevorzugt sind beispielsweise Copolymerisate aus (i) N-Vinylformamid und (ii) Acrylnitril, Copolymerisate aus
(i) N-Vinylformamid,
(ii) Acrylsäure, Methacrylsäure und/oder deren Alkalimetall-, Erdalkalimetall- oder Ammoniumsalzen und gegebenenfalls Acrylnitril und/oder Methacrylnitril.

Eine weitere Modifizierung der Vinylcarbonsäureamid-Copolymerisate ist dadurch möglich, dass man bei der Copolymerisation Monomere der Gruppe (iii) einsetzt, die mindestens zwei Doppelbindungen im Molekül enthalten, z.B. Triallylamin, Methylenbisacrylamid, Glykoldiacrylat, Glykoldimethacrylat, Glycerintriacrylat, Pentaerythrittriallylether, mindestens zweifach mit Acrylsäure und/oder Methacrylsäure veresterte Polyalkylenglykole oder Polyole wie Pentaerythrit, Sobit oder Glukose. Die Monomeren der Gruppe (iii) können entweder allein oder mit mindestens einem Monomer der Gruppe (i) oder auch mit mindestens einem Monomer der Gruppen (i) und (ii) copolymerisiert werden. Falls mindestens ein Monomer der vorstehenden Gruppe bei der Polymerisation eingesetzt wird, so betragen die angewendeten Mengen bis zu 2 Mol-%, z.B. 0,001 bis 1 Mol-%, bezogen auf die insgesamt eingesetzten Monomeren.

Weiterhin kann es zur Modifizierung der Polymeren sinnvoll sein, den Einsatz vorstehender Vernetzter mit dem Zusatz von Reglern zu kombinieren. Eingesetzt werden typischerweise 0,001 bis 5 Mol-%. Anwendung finden können alle literaturbekannten Regler, z.B. Schwefelverbindungen wie Mercaptoethanol, 2-Ethylhexylthioglycolat, Thioglycolsäure und Dodecylmercaptan sowie Natriumhypophosphit, Ameisensäure oder Tribromchlormethan.

Zu den Vinylcarbonsäureamid-Einheiten enthaltenden Polymeren gehören auch Pfropfpolymerisate von N-Vinylcarbonsäureamiden, beispielsweise Pfropfpolymerisate von N-Vinylformamid auf Polyalkylenglykolen, Polyvinylacetat, Polyvinylalkolhol, Polyvinylformamiden, Polysacchariden wie Stärke, Oligosacchariden oder Monosacchariden. Die Pfropfpolymerisate sind dadurch erhältlich, dass man ein N-Vinylcarbonsäureamid, insbesondere N-Vinylformamid in wässrigem Medium in Gegenwart mindestens einer der genannten Pfropfgrundlagen gegebenenfalls zusammen mit copolymerisierbaren anderen Monomeren radikalisch polymerisiert.

Die Herstellung der oben beschriebenen Vinylcarbonsäureamid-Einheiten enthaltenden Homo- und Copolymerisate kann durch Lösungs-, Fällungs-, Suspensions- oder Emulsionspolymerisation erfolgen. Bevorzugt ist die Lösungspolymerisation in wässrigen Medien. Geeignete wässrige Medien sind Wasser und Gemische aus Wasser und mindestens einem wassermischbaren Lösungsmittel, z.B. einem Alkohol, wie Methanol, Ethanol, n-Propanol oder Isopropanol. Die Vinylcarbonsäureamid-Einheiten enthaltenden Polymeren haben beispielsweise K-Werte (bestimmt nach H. Fikentscher in 5 %iger wässriger Kochsalzlösung bei pH 7, einer Polymerkonzentration von 0,5 Gew.-% und einer Temperatur von 25°C) in dem Bereich von 20 bis 250, vorzugsweise 50 bis 180.

Um die Vinylcarbonsäureamid-Einheiten enthaltenden Polymerisate zu hydrolysieren, löst oder dispergiert man sie zunächst in Wasser. Die Polymerkonzentration der wäßrigen Lösung oder Dispersion beträgt beispielsweise 1 bis 60 Gew.-%, vorzugsweise 5 bis 45 Gew.-%. Die Polymerlösung wird dann mit einer wässrigen Lösung einer Base oder Säure einem Rohrreaktor zugeführt. Man kann beide Komponenten voneinander getrennt in den Rohrreaktor dosieren oder sie vorzugsweise vor Eintritt in den Rohrreaktor mischen, z.B. in einem Mischer. Während des Mischvorgangs, danach oder davor kann gegebenenfalls Wasser zugefügt werden, um die Viskosität der zu hydrolysierenden Lösung einzustellen. Die Viskosität dieser Lösung liegt beispielsweise bei einer Temperatur von 20 °C in dem Bereich von 50 bis 20 000 mPas, vorzugsweise beträgt sie 100 bis 7 500 mPas. In einer Ausführungsform des erfindungsgemäßen Verfahrens wird die zu hydrolysierende Mischung aus Vinylcarbonsäureamid-Einheiten enthaltendem Polymer und einer Base oder einer Säure vor Eintritt in den Rohrreaktor auf eine Temperatur von beispielsweise 80 bis 100 °C erhitzt. Besonders vorteilhaft ist es, die Reaktionsmischung bereits vor dem Dosieren in den Reaktor auf die jeweilige Temperatur der Hydrolyse zu erhitzen. Die Reaktionsmischung wird dann in den Reaktor gepumpt und darin bei Temperaturen in dem Bereich von >100 °C bis zu 250 °C unter erhöhtem Druck, der sich aufgrund der Temperatur ergibt oder/und von außen durch einen Druckerzeuger wie z.B. eine Pumpe aufgeprägt wird, bei der die Hydrolyse durchgeführt wird, durch den Reaktor geleitet. Der Druck im Rohrreaktor beträgt beispielsweise 1 bis 40 bar und liegt meistens in dem Bereich von 1,5 bis 10 bar. Die Temperatur im Rohrreaktor beträgt bei der Hydrolyse meistens 120 bis 180 °C und liegt vorzugsweise in dem Bereich von 130 bis 160 °C.

Bei der Hydrolyse mit Basen verwendet man beispielsweise wässrige Lösungen von Hydroxiden der ersten und zweiten Hauptgruppe des Periodischen Systems wie Lithiumhydroxid, Natriumhydroxid, Kaliumhydroxid, Calciumhydroxid oder Bariumhydroxid. Vorzugsweise setzt man wässrige Lösungen von Kaliumhydroxid oder Natriumhydroxid als Base ein. Die Konzentration der Basen in der wässrigen Lösung beträgt beispielsweise 10 bis 50 Gew.-% vorzugsweise 20 bis 40 Gew.-%.

Für die Hydrolyse geeignete Säuren sind z.B. Mineralsäuren wie wässrige Lösungen von Halogenwasserstoffen, Schwefelsäure, Salpetersäure oder Phosphorsäure, oder aliphatische oder aromatische Sulfonsäuren wie Methansulfonsäure, Benzolsulfonsäure oder Toluolsulfonsäure. Außerdem eignen sich als Säuren für die Hydrolyse beispielsweise noch C₁- bis C₅-Carbonsäuren wie Ameisensäure, Essigsäure oder Propionsäure.

Pro Vinylcarbonsäureamid-Äquivalent verwendet man beispielsweise 0,05 bis weniger als ein Äquivalent einer Base oder Säure, meistens setzt man 0,2 bis 0,9 Äquivalente einer Base oder einer Säure ein. Besonders bevorzugt wird bei der Hydrolyse Natronlauge verwendet.

Die in den Rohrreaktor gepumpte wässrige Mischung aus Vinylcarbonsäureamid und Base oder Säure durchläuft den Rohrreaktor quasi in Form einer Pfropfenströmung. Um einer Pfropfenströmung möglichst nahe zu kommen, weist der Rohrreaktor mindestens ein Mischelement auf. Meistens enthält er mehrere Mischelemente, z.B. 2 bis 50, vorzugsweise 3 bis 30.

Das Reaktionsgemisch wird kontinuierlich durch den Rohrreaktor geleitet, wobei eine dem Reaktor kontinuierlich pro Zeiteinheit am Anfang des Reaktors zugeführte Menge am Ende des Rohrreaktors kontinuierlich entnommen und entspannt wird. Der Ausdruck "kontinuierlich" soll auch eine pulsierende Entnahme des Reaktionsprodukts aus dem Rohrreaktor umfassen. Die Verweilzeit des Reaktionsgemisches im Rohrreaktor beträgt beispielsweise 10 Sekunden bis 2 Stunden, vorzugsweise 1 bis 60 Minuten.

Das Reaktionsgemisch, das den Rohrreaktor verlässt, kann vor oder nach dem Entspannen mit Hilfe eines Wärmetauschers abgekühlt werden, beispielsweise auf eine Temperatur in dem Bereich von 10 bis 80°C.

Das Reaktionsgemisch kann dann neutralisiert werden. Sofern bei der Hydrolyse eine Base verwendet wurde, neutralisiert man es mit einer Säure. Der pH-Wert wird dabei auf einen Wert in dem Bereich von beispielsweise 5,0 bis 9,0 eingestellt. Die bei der Neutralisation entstehende Neutralisationswärme kann beispielsweise genutzt werden, indem man die neutralisierte Reaktionsmischung durch einen Wärmetauscher leitet. Man erhält nach dem erfindungsgemäßen Verfahren in Abhängigkeit von den jeweils gewählten Reaktionsbedingungen vollständig oder partiell hydrolysierte Vinylcarbonsäureamidpolymere. Der Hydrolysegrad der im Polymerisat enthaltenen Vinylcarbonsäureamid-Einheiten beträgt beispielsweise 1 bis 100 Mol-%. Er liegt bei einer patiellen Hydrolyse meistens in dem Bereich von 5 bis 98, vorzugsweise bei 10 bis 95 Mol-%.

Bei der Hydrolyse entsteht aus den Polymeren, die Verbindungen der Formel I einpolymerisiert enthalten, unter Abspaltung der Gruppierung - CO -R¹ eine Vinylamineinheit (II): 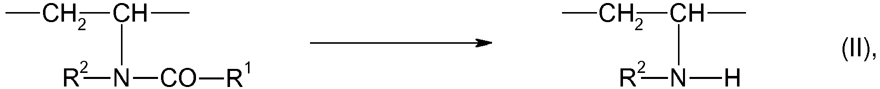 wobei die Substituenten R¹, R² = H oder C₁- bis C₆-Alkyl bedeuten. Die Molmassen M_{w} der hydrolysierten Polymeren betragen beispielsweise 5000 bis 15 Millionen, meistens 10 000 bis 5 Millionen (gemessen nach der Methode der Lichtstreuung).

Nach dem erfindungsgemäßen Verfahren kann man in gut reproduzierbarer Weise partiell hydrolysierte Polyvinylcarbonsäureamide herstellen, die im Vergleich mit diskontinuierlich hydrolysierten Polyvinylcarbonsäureamiden nur eine geringe Schwankungsbreite im Hydrolysegrad aufweisen.

Nach dem erfindungsgemäßen Verfahren werden vorzugsweise Homopolymerisate des N-Vinylformamids oder Copolymerisate des N-Vinylformamids hydrolysiert. Die hydrolysierten Polymerisate werden beispielsweise als Fixiermittel, Verfestigungsmittel, Flockungmittel und Retentionsmittel bei der Herstellung von Papier verwendet.

Die K-Werte der Polymeren wurden nach H. Fikentscher, Cellulose-Chemie, Band 13, 58-64 und 71-74 (1932) in 5 %-iger wässriger Kochsalzlösung bei einem pH-Wert von 7, einer Polymerkonzentration von 0,5 Gew.-% und einer Temperatur von 25 °C bestimmt.

Der Hydrolysegrad der Polymeren ist definiert als der molare Anteil in % der Vinylformamid-Einheiten, die hydrolysiert wurden. Er wurde durch Polyelektrolyttitration bei einem pH-Wert von 3,5 nach D. Horn et al., Progr. Colloid & Polymer Sci., Band 65, 251-264 (1978) bestimmt.

### Beispiele

Aus einem Vorratsgefäß pumpte man einen konstanten Strom einer 20 gew.-%igen wässrigen Lösung eines Homopolymerisates von N-Vinylformamid mit einem K-Wert von 90 (M_{w} betrug ca. 340 000) und die in der Tabelle jeweils angegebenen Mengen an 25 %iger wässriger Natronlauge (in mol%, bezogen auf Vinylformamid-Einheiten) in einen Mischer. Das Reaktionsgemisch wurde dann unter einem Druck von 15 bar in einen Rohrreaktor gepumpt, wobei es in einem Wärmetauscher auf die in der Tabelle jeweils angegebene Temperatur erhitzt wurde, bei der die Hydrolyse durchgeführt wurde. Der verwendete Rohrreaktor wies ein Verhältnis von Länge zu Durchmesser von 160 auf und enthielt 6 Mischelemente über den Reaktor verteilt. Die Durchflußgeschwindigkeit der Reaktionsmischung durch den Rohrreaktor wurde so angepasst, dass das hydrolysierte Polymer am Ende des Rohrreaktors den gewünschten Hydrolysegrad aufwies, der für die einzelnen Beispiele ebenfalls in der Tabelle angegeben ist. Unmittelbar nach dem Entspannen und dem Austritt des Produktstroms aus dem Rohrreaktor wurde die Lösung mit Hilfe eines Wärmetauschers auf eine Temperatur von 40 °C abgekühlt und mit soviel an 30 %iger wässriger Salzsäure versetzt, dass der pH-Wert des Hydrolyseprodukts 7,0 betrug. Mit Hilfe eines weiteren Wärmetauschers wurde schließlich die Neutralisationswärme abgeführt. Die Reaktionsbedingungen sind in der Tabelle angegeben.

Die jeweils erhaltenen Produkte wurden als Trockenverfestiger für Papier geprüft und mit Proben von diskontinuierlich hydrolysierten Polyvinylformamiden verglichen. Dabei wurde bezüglich Berstdruck, SCT-Wert und CMT-Wert kein signifikanter Unterschied festgestellt. Die Eigenschaften wurden nach folgenden Methoden bestimmt:
- Berstdruck nach DIN ISO 2758 (bis 600 kPa), DIN ISO 2759 (ab 600 kPa)
- SCT nach DIN 54518 (Bestimmung des Streifenstauchwiderstandes)
- CMT nach DIN EN 23035 (Bestimmung des Flachstauchwiderstandes)
- DIN EN ISO 7263 (Bestimmung des Flachstauchwiderstandes an labormäßig gewellter Wellpappe)

**Tabelle**

| Beispiel Nr. | Temperatur | Zugesetzte NaOH-Menge ^{*)} | Verweilzeit/ Hydrolysedauer | Hydrolysegrad *) | Festgehalt |
|---|---|---|---|---|---|
| 1 | 140°C | 25% | 21 min | 30% | 16% |
| 2 | 140°C | 42% | 19 min | 50% | 18% |
| 3 | 140°C | 80% | 25 min | >95% | 21% |
| 4 | 130°C | 44% | 39 min | 50% | 18% |
| 5 | 160°C | 38% | 10 min | 50% | 18% |

| | | | | | |
|---|---|---|---|---|---|
| *) in mol% bezogen auf die Struktureinheiten Vinylfomamid | | | | | |

## Patentansprüche

1. Verfahren zur Hydrolyse von Vinylcarbonsäureamid-Einheiten enthaltenden Polymerisaten durch Erhitzen von Vinylcarbonsäureamid-Einheiten enthaltenden Polymerisaten in wässrigem Medium in Gegenwart von Säuren oder Basen, **dadurch gekennzeichnet, dass** man einem Rohrreaktor unter erhöhtem Druck kontinuierlich eine wässrige Lösung oder Dispersion eines Vinylcarbonsäureamid-Einheiten enthaltenden Polymerisates und einer wässrigen Lösung einer Base oder Säure zuführt, wobei man pro VinylcarbonsäureamidÄquivalent 0,1 bis weniger als ein Äquivalent einer Base oder Säure einsetzt, die Mischung bei einer Temperatur von >100 °C bis zu 250 °C durch den Rohrreaktor leitet, entspannt und abkühlt.

2. Verfahren nach Anspruch 1, **dadurch gekennzeichnet, dass** man die Mischung bei einer Temperatur von 120 bis 180 °C durch den Rohrreaktor leitet.

3. Verfahren nach Anspruch 1 oder 2, **dadurch gekennzeichnet, dass** der Rohrreaktor ein Verhältnis von Durchmesser zu Länge von 1 : 10 bis 1 : 20 000 aufweist.

4. Verfahren nach einem der Ansprüche 1 bis 3, **dadurch gekennzeichnet, dass** der Rohrreaktor ein Verhältnis von Durchmesser zu Länge von 1 : 20 bis 1 : 2000 aufweist.

5. Verfahren nach einem der Ansprüche 1 bis 4, **dadurch gekennzeichnet, dass** die Reaktionsmischung zumindest annähernd in Form einer Pfropfenströmung durch den Reaktor geführt wird.

6. Verfahren nach einem der Ansprüche 1 bis 5, **dadurch gekennzeichnet, dass** die Verweilzeit des Reaktionsgemisches im Rohrreaktor 10 Sekunden bis 1 Stunde beträgt.

7. Verfahren nach einem der Ansprüche 1 bis 6, **dadurch gekennzeichnet, dass** die Vinylcarbonsäureamid-Einheiten enthaltenden Polymerisate erhältlich sind durch Polymerisieren von
(i) mindestens eines Monomeren der Formel 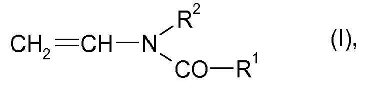 in der R¹, R² = H oder C₁- bis C₆-Alkyl bedeuten,
und gegebenenfalls
(ii) mindestens eines anderen monoethylenisch ungesättigten Monomer und gegebenenfalls
(iii) mindestens eines vernetzend wirkenden Monomers mit mindestens zwei Doppelbindungen im Molekül.

8. Verfahren nach einem der Ansprüche 1 bis 7, **dadurch gekennzeichnet, dass** man Homopolymerisate des N-Vinylformamids hydrolysiert.

9. Verfahren nach einem der Ansprüche 1 bis 7, **dadurch gekennzeichnet, dass** man Copolymerisate des N-Vinylformamids hydrolysiert.

## Claims

1. A process for the hydrolysis of polymers comprising vinylcarboxamide units by heating polymers comprising vinylcarboxamide units in an aqueous medium in the presence of acids or bases, wherein an aqueous solution or dispersion of a polymer comprising vinylcarboxamide units and an aqueous solution of a base or acid are fed continuously to a tubular reactor at elevated pressure, from 0.1 to less than one equivalent of a base or acid being used per vinylcarboxamide equivalent and the mixture being passed through the tubular reactor at a temperature of >100°C to 250°C, depressurized and cooled.

2. The process according to claim 1, wherein the mixture is passed through the tubular reactor at a temperature of from 120 to 180°C.

3. The process according to claim 1 or 2, wherein the tubular reactor has a ratio of diameter to length of from 1 : 10 to 1 : 20 000.

4. The process according to any of claims 1 to 3,
wherein the tubular reactor has a ratio of diameter to length of from 1 : 20 to 1 : 2000.

5. The process according to any of claims 1 to 4,
wherein the reaction mixture is fed at least approximately in the form of plug flow through the reactor.

6. The process according to any of claims 1 to 5, wherein the residence time of the reaction mixture in the tubular reactor is from 10 seconds to 1 hour.

7. The process according to any of claims 1 to 6, wherein the polymers comprising vinylcarboxamide units are obtainable by polymerization of
(i) at least one monomer of the formula 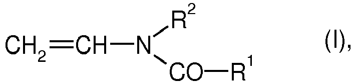 in which R¹, R² are H or C₁- to C₆-alkyl,
and optionally
(ii) at least one other monoethylenically unsaturated monomer and optionally
(iii) at least one crosslinking monomer having at least two double bonds in the molecule.

8. The process according to any of claims 1 to 7, wherein homopolymers of N-vinylformamide are hydrolyzed.

9. The process according to any of claims 1 to 7, wherein copolymers of N-vinylformamide are hydrolyzed.

## Revendications

1. Procédé d'hydrolyse de polymères contenant des unités amide d'acide vinylcarboxylique par chauffage de polymères contenant des unités amide d'acide vinylcarboxylique dans un milieu aqueux en présence d'acides ou de bases, **caractérisé en ce qu'**une solution ou dispersion aqueuse d'un polymère contenant des unités amide d'acide vinylcarboxylique et une solution aqueuse d'une base ou d'un acide sont introduits en continu dans un réacteur tubulaire sous pression élevée, 0,1 à moins d'un équivalent d'une base ou d'un acide étant utilisé par équivalent d'amide d'acide vinylcarboxylique, le mélange traversant le réacteur tubulaire à un température de > 100 °C à 250 °C, étant détendu et refroidi.

2. Procédé selon la revendication 1, **caractérisé en ce que** le mélange traverse le réacteur tubulaire à une température de 120 à 180 °C.

3. Procédé selon la revendication 1 ou 2, **caractérisé en ce que** le réacteur tubulaire présente un rapport diamètre sur longueur de 1:10 à 1:20 000.

4. Procédé selon l'une quelconque des revendications 1 à 3, **caractérisé en ce que** le réacteur tubulaire présente un rapport diamètre sur longueur de 1:20 à 1:2 000.

5. Procédé selon l'une quelconque des revendications 1 à 4, **caractérisé en ce que** le mélange réactionnel traverse le réacteur au moins approximativement sous la forme d'un écoulement piston.

6. Procédé selon l'une quelconque des revendications 1 à 5, **caractérisé en ce que** le temps de séjour du mélange réactionnel dans le réacteur tubulaire est de 10 secondes à 1 heure.

7. Procédé selon l'une quelconque des revendications 1 à 6, **caractérisé en ce que** les polymères contenant des unités amide d'acide vinylcarboxylique peuvent être obtenus par polymérisation de
(i) au moins un monomère de formule 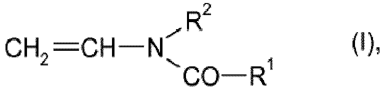 dans laquelle R¹, R² = H ou alkyle en C₁ à C₆,
et éventuellement
(ii) au moins un autre monomère monoéthyléniquement insaturé, et éventuellement
(iii) au moins un monomère à effet réticulant contenant au moins deux doubles liaisons par molécule.

8. Procédé selon l'une quelconque des revendications 1 à 7, **caractérisé en ce que** des homopolymères de N-vinylformamide sont hydrolysés.

9. Procédé selon l'une quelconque des revendications 1 à 7, **caractérisé en ce que** des copolymères de N-vinylformamide sont hydrolysés.
